# EUROPÄISCHE PATENTSCHRIFT

(11) **EP 3 277 009 B1**
(45) Veröffentlichungstag und Bekanntmachung des Hinweises auf die Patenterteilung: **14.04.2021**
(21) Anmeldenummer: 16182098.0
(22) Anmeldetag: 29.07.2016
(51) Int. Cl.: H04W 12/06, H04W 12/00, H04L 12/911, H04W 28/02, H04W 40/24, H04W 8/24, H04W 12/30, H04W 8/20, H04W 12/04

(54) **TEILNEHMERIDENTITÄTSELEMENT ZUM AUTHENTIFIZIEREN EINES KOMMUNIKATIONSGERÄTES GEGENÜBER EINEM KOMMUNIKATIONSNETZWERK**
SUBSCRIBER IDENTITY ELEMENT FOR AUTHENTICATING A COMMUNICATION DEVICE TO A COMMUNICATION NETWORK
ÉLEMENT D'IDENTITÉ D'ABONNÉ DESTINÉ À AUTHENTIFIER UN APPAREIL DE COMMUNICATION PAR RAPPORT À UN RÉSEAU DE COMMUNICATION

(43) Veröffentlichungstag der Anmeldung: 31.01.2018
(73) Patentinhaber: Deutsche Telekom AG, 53113 Bonn (DE)
(72) Erfinder: Sonntag, Dr. Thomas, 53343 Wachtberg (DE)
(74) Vertreter: Raible Deissler Lehmann Patentanwälte PartG mbB

(56) Entgegenhaltungen:
- WO-A1-2016/185129
- US-A1- 2014 004 827
- US-A1- 2016 127 132
- V1 Gsm Assication: "RSP Technical Specification Version 1.1", , 9. Juni 2016 (2016-06-09), Seiten 1-125, XP055320845, Gefunden im Internet: URL:http://www.gsma.com/rsp/wp-content/upl oads/docs/SGP.22 v1.1.pdf [gefunden am 2016-11-18]
- Anonymus: "3rd Generation Partnership Project; Technical Specification Group Services and System Aspects; Study on the security aspects of the next generation system (Release 14)", 3GPP TR 33.899 V0.5.0 (2016-10, 1 January 2016 (2016-01-01), pages 1-244, XP055479831, Retrieved from the Internet: URL:www.3gpp.org/ftp/Specs/archive/33_seri es/33.899/33899-050.zip [retrieved on 2018-05-30]

## Beschreibung

### TECHNISCHES GEBIET

Die vorliegende Erfindung betrifft das Gebiet der Kommunikationstechnik, insbesondere der Authentifizierung eines Kommunikationsgerätes gegenüber einem Kommunikationsnetzwerk.

### TECHNISCHER HINTERGRUND

Die Authentifizierung von Kommunikationsgeräten, beispielsweise von Mobiltelefonen, gegenüber einem Kommunikationsnetzwerk erfolgt in der Regel unter Verwendung von Teilnehmeridentitätselementen. Die Teilnehmeridentitätselemente sind hierbei ausgebildet, Daten zu speichern, welche das jeweilige Kommunikationsgerät eindeutig identifizieren.

Bei Kommunikationsgeräten nach dem GSM-Standard (Global System for Mobile Communications) kommen beispielsweise Teilnehmeridentitätselemente in Form von Chipkarten zum Einsatz, welche auch als SIM (Subscriber Identity Module) bezeichnet werden. Diese umfassen beispielsweise eine IMSI (International Mobile Subscriber Identity), welche einem Benutzer des Kommunikationsgerätes zugeordnet ist und zur Authentifizierung des Kommunikationsgerätes gegenüber dem Kommunikationsnetzwerk verwendet wird.

In Kommunikationsnetzwerken der fünften Generation (5G) und weiteren Generationen ist vorgesehen, Teilnehmeridentitätselemente jeweils fest in den Kommunikationsgeräten zu integrieren und die jeweiligen Daten zum Identifizieren und Authentifizieren in Form von Teilnehmerprofilen über das Kommunikationsnetzwerk bereitzustellen.

US 2014/004827 A1 offenbart ein Verfahren und eine Vorrichtung zum Bereitstellen eingebetteter universeller integrierter Schaltungskarten (eUICCs). Ein Zertifizierungsserver kann Datensätze für jede eUICC speichern, die bereitgestellte Profildaten enthält. Ein Regulierungsdomainserver kann eine Regulierungsdomain regeln, die eine Vielzahl von Mobilfunknetzbetreibern enthält und kann beim Bereitstellen von drahtlosen Geräten mit eUICCs behilflich sein. Die eUICC kann einen vollqualifizierten Domainnamen für den Zertifizierungsserver, den Geräteinstallationsserver und/oder den Regulierungsdomainserver enthalten, um die Bereitstellung oder erneute Bereitstellung über eine IP-Verbindung auszulösen.

US 2016/0127132 A1 betrifft ein Verfahren und eine Vorrichtung zum Installieren eines Profils und insbesondere ein Verfahren zum Verwalten von Mobilkommunikationsteilnehmerinformationen, bspw. zum Ferninstallieren und Deinstallieren eines Profils auf einem Sicherheitsmodul, das in ein Terminal eingebettet ist und das nicht anbringbar oder abnehmbar ist, wodurch UICC ersetzt wird.

### BESCHREIBUNG DER ERFINDUNG

Es ist eine Aufgabe der vorliegenden Erfindung, ein effizientes Konzept zum Initialisieren eines Teilnehmeridentitätselementes eines Kommunikationsgerätes zu schaffen. Diese Aufgabe wird durch die Merkmale der unabhängigen Ansprüche gelöst. Vorteilhafte Ausführungsformen der Erfindung sind Gegenstand der Bschreibung, der Zeichnungen sowie der abhängigen Ansprüche.

Die vorliegende Erfindung basiert auf der Erkenntnis, dass die obige Aufgabe durch ein Teilnehmeridentitätselement gelöst werden kann, welches mit einem Discovery-Server eines Kommunikationsnetzwerkes kommunizieren kann. Der Discovery-Server ist dabei einem Subnetzwerk des Kommunikationsnetzwerkes zugeordnet, wobei der Discovery-Server unter Verwendung einer Subnetzwerkkennung des Subnetzwerkes erreichbar ist.

Das Teilnehmeridentitätselement ist ausgebildet, eine Profil-Serverkennung eines Profilservers von dem Discovery-Server zu empfangen und ein Teilnehmerprofil unter Verwendung der Profil-Serverkennung von dem Profil-Server abzurufen. Das Teilnehmerprofil umfasst dabei Daten, welche zum Identifizieren und Authentifizieren des Kommunikationsgerätes gegenüber dem Kommunikationsnetzwerk verwendet werden können.

Dadurch wird erreicht, dass ein dediziertes Subnetzwerk mit einem Discovery-Server bereitgestellt werden kann, um einem Teilnehmeridentitätselement ein Teilnehmerprofil zuzuweisen. Das Subnetzwerk kann beispielsweise ein Slice des Kommunikationsnetzwerkes sein.

Gemäß einem ersten Aspekt betrifft die Erfindung ein Teilnehmeridentitätselement zum Authentifizieren eines Kommunikationsgerätes gegenüber einem Kommunikationsnetzwerk, wobei dem Teilnehmeridentitätselement eine Teilnehmeridentitätskennung zugeordnet ist, und wobei das Kommunikationsnetzwerk ein Subnetzwerk mit einem Discovery-Server umfasst. Das Teilnehmeridentitätselement umfasst einen Speicher, in welchem ein Initialisierungsprofil des Teilnehmeridentitätselements gespeichert ist, wobei das Initialisierungsprofil eine Subnetzwerkkennung des Subnetzwerks anzeigt. Das Teilnehmeridentitätselement umfasst ferner eine Kommunikationsschnittstelle, welche ausgebildet ist, eine Kommunikationsverbindung zu dem Discovery-Server unter Verwendung der Subnetzwerkkennung aufzubauen, und die Teilnehmeridentitätskennung über die Kommunikationsverbindung an den Discovery-Server auszusenden. Das Teilnehmeridentitätselement kann eine eSIM (embedded SIM), eine UICC (Universal Integrated Circuit Card) oder eine eUICC (embedded Universal Integrated Circuit Card) sein.

Gemäß einer Ausführungsform ist die Teilnehmeridentitätskennung in dem Speicher gespeichert. Die Teilnehmeridentitätskennung kann eine eID (eUlCC-ID) sein.

Gemäß einer Ausführungsform ist dem Discovery-Server eine Discovery-Serverkennung zugeordnet, wobei das Initialisierungsprofil ferner die Discovery-Serverkennung anzeigt, und wobei die Kommunikationsschnittstelle ferner ausgebildet ist, die Kommunikationsverbindung zu dem Discovery-Server unter Verwendung der Discovery-Serverkennung aufzubauen. Die Discovery-Serverkennung kann ein URI (Uniform Resource Identifier) des Discovery-Servers sein.

Gemäß einer Ausführungsform umfasst das Kommunikationsnetzwerk ferner einen Profil-Server, wobei dem Profil-Server eine Profil-Serverkennung zugeordnet ist, und wobei die Kommunikationsschnittstelle ferner ausgebildet ist, die Profil-Serverkennung von dem Discovery-Server über die Kommunikationsverbindung zu empfangen. Der Profil-Server kann ein SMDP (Subscription Manager Data Preparation) Server oder ein SMDP+ (Subscription Manager Data Preparation Plus) Server sein. Die Profil-Serverkennung kann ein URI (Uniform Resource Identifier) des Profil-Servers sein.

Gemäß einer Ausführungsform ist die Kommunikationsschnittstelle ferner ausgebildet, eine weitere Kommunikationsverbindung zu dem Profil-Server unter Verwendung der Profil-Serverkennung aufzubauen, und ein Teilnehmerprofil von dem Profil-Server über die weitere Kommunikationsverbindung abzurufen. Das Teilnehmerprofil kann eine IMSI (International Mobile Subscriber Identity) umfassen.

Gemäß einer Ausführungsform ist die Kommunikationsschnittstelle ferner ausgebildet, die Kommunikationsverbindung zu dem Discovery-Server bei einer Initialisierung, insbesondere einer erstmaligen Initialisierung, des Teilnehmeridentitätselements aufzubauen. Das Initialisierungsprofil kann folglich zur Initialisierung des Teilnehmeridentitätselements eingesetzt werden. Das Initialisierungsprofil kann ein Bootstrap-Profil sein.

Gemäß einer Ausführungsform ist das Kommunikationsnetzwerk ein Kommunikationsnetzwerk der fünften Generation (5G) oder einer weiteren Generation, wobei das Subnetzwerk ein Slice des Kommunikationsnetzwerkes ist, und wobei die Subnetzwerkkennung eine Slice-Kennung ist.

Gemäß einem zweiten Aspekt betrifft die Erfindung ein Kommunikationsgerät zum Kommunizieren über ein Kommunikationsnetzwerk. Das Kommunikationsgerät umfasst ein Teilnehmeridentitätselement gemäß dem ersten Aspekt der Erfindung, wobei das Teilnehmeridentitätselement ausgebildet ist, das Kommunikationsgerät gegenüber dem Kommunikationsnetzwerk zu authentifizieren.

Gemäß einem dritten Aspekt betrifft die Erfindung einen Discovery-Server zum Kommunizieren mit einem Teilnehmeridentitätselement über ein Kommunikationsnetzwerk, wobei der Discovery-Server einem Subnetzwerk des Kommunikationsnetzwerkes zugeordnet ist, und wobei das Teilnehmeridentitätselement ausgebildet ist, eine Kommunikationsverbindung zu dem Discovery-Server unter Verwendung einer Subnetzwerkkennung des Subnetzwerks aufzubauen. Der Discovery-Server umfasst eine Kommunikationsschnittstelle, welche ausgebildet ist, eine Teilnehmeridentitätskennung über die Kommunikationsverbindung von dem Teilnehmeridentitätselement zu empfangen, wobei dem Teilnehmeridentitätselement die Teilnehmeridentitätskennung zugeordnet ist. Der Discovery-Server umfasst ferner einen Prozessor, welcher ausgebildet ist, eine Profil-Serverkennung eines Profil-Servers auf der Basis der Teilnehmeridentitätskennung zu bestimmen, wobei der Profil-Server dem Teilnehmeridentitätselement zugeordnet ist. Die Kommunikationsschnittstelle ist ferner ausgebildet, die Profil-Serverkennung über die Kommunikationsverbindung an das Teilnehmeridentitätselement auszusenden.

Gemäß einer Ausführungsform ist die Kommunikationsschnittstelle ferner ausgebildet, mit einer Datenbank zu kommunizieren, wobei die Datenbank dem Subnetzwerk zugeordnet ist, wobei die Datenbank eine Zuordnung einer Mehrzahl von Teilnehmeridentitätskennungen zu einer Mehrzahl von Profil-Serverkennungen anzeigt, und wobei jeder Teilnehmeridentitätskennung eine Profil-Serverkennung zugeordnet ist.

Gemäß einer Ausführungsform ist der Prozessor ferner ausgebildet, die empfangene Teilnehmeridentitätskennung mit der Mehrzahl von Teilnehmeridentitätskennungen zu vergleichen, wobei die Kommunikationsschnittstelle ausgebildet ist, eine Profil-Serverkennung von der Datenbank abzurufen, welche der empfangenen Teilnehmeridentitätskennung zugeordnet ist.

Gemäß einem vierten Aspekt betrifft die Erfindung ein Kommunikationssystem nach Anspruch 1 zum Kommunizieren über ein Kommunikationsnetzwerk. Das Kommunikationssystem umfasst ein Kommunikationsgerät, wobei das Kommunikationsgerät ein Teilnehmeridentitätselement gemäß dem ersten Aspekt der Erfindung umfasst. Das Kommunikationssystem umfasst ferner einen Discovery-Server gemäß dem dritten Aspekt der Erfindung, wobei der Discovery-Server einem Subnetzwerk des Kommunikationsnetzwerkes zugeordnet ist. Gemäß einer Ausführungsform umfasst das Kommunikationssystem eine Datenbank, wobei die Datenbank dem Subnetzwerk zugeordnet ist, wobei die Datenbank eine Zuordnung einer Mehrzahl von Teilnehmeridentitätskennungen zu einer Mehrzahl von Profil-Serverkennungen anzeigt, und wobei jeder Teilnehmeridentitätskennung eine Profil-Serverkennung zugeordnet ist. Der Discovery-Server kann mit der Datenbank kommunizieren.

Gemäß einem fünften Aspekt betrifft die Erfindung ein Subnetzwerk eines Kommunikationsnetzwerkes mit einer Mehrzahl von Subnetzwerken, mit einem Discovery-Server gemäß dem dritten Aspekt der Erfindung, welcher in dem Subnetzwerk angeordnet ist und über das Subnetzwerk adressierbar ist. Das Subnetzwerk kann ein Punkt-zu-Punkt Subnetzwerk sein.

Gemäß einer Ausführungsform ist das Kommunikationsnetzwerk ein Kommunikationsnetzwerk der fünften Generation (5G) oder einer weiteren Generation, wobei das Subnetzwerk ein Slice des Kommunikationsnetzwerkes ist, und wobei der Discovery-Server unter Verwendung einer Subnetzwerkkennung des Subnetzwerkes adressierbar ist.

Gemäß einem sechsten Aspekt betrifft die Erfindung ein Verfahren nach Anspruch 9 zum Authentifizieren eines Kommunikationsgerätes gegenüber einem Kommunikationsnetzwerk unter Verwendung eines Teilnehmeridentitätselements, wobei das Teilnehmeridentitätselement einen Speicher und eine Kommunikationsschnittstelle umfasst, wobei dem Teilnehmeridentitätselement eine Teilnehmeridentitätskennung zugeordnet ist, wobei das Kommunikationsnetzwerk ein Subnetzwerk mit einem Discovery-Server umfasst, wobei in dem Speicher ein Initialisierungsprofil des Teilnehmeridentitätselements gespeichert ist, und wobei das Initialisierungsprofil eine Subnetzwerkkennung des Subnetzwerks anzeigt. Das Verfahren umfasst ein Aufbauen einer Kommunikationsverbindung zu dem Discovery-Server unter Verwendung der Subnetzwerkkennung durch die Kommunikationsschnittstelle, und ein Aussenden der Teilnehmeridentitätskennung über die Kommunikationsverbindung an den Discovery-Server durch die Kommunikationsschnittstelle. Das Verfahren kann durch das Teilnehmeridentitätselement ausgeführt werden. Weitere Merkmale des Verfahrens resultieren unmittelbar aus den Merkmalen und/oder der Funktionalität des Teilnehmeridentitätselementes.

Das Verfahren nach Anspruch 9 umfasst auch ein Kommunizieren mit einem Teilnehmeridentitätselement über ein Kommunikationsnetzwerk unter Verwendung eines Discovery-Servers, wobei der Discovery-Server eine Kommunikationsschnittstelle und einen Prozessor umfasst, wobei der Discovery-Server einem Subnetzwerk des Kommunikationsnetzwerkes zugeordnet ist, und wobei das Teilnehmeridentitätselement ausgebildet ist, eine Kommunikationsverbindung zu dem Discovery-Server unter Verwendung einer Subnetzwerkkennung des Subnetzwerks aufzubauen. Das Verfahren umfasst ein Empfangen einer Teilnehmeridentitätskennung über die Kommunikationsverbindung von dem Teilnehmeridentitätselement durch die Kommunikationsschnittstelle, wobei dem Teilnehmeridentitätselement die Teilnehmeridentitätskennung zugeordnet ist, ein Bestimmen einer Profil-Serverkennung eines Profil-Servers auf der Basis der Teilnehmeridentitätskennung durch den Prozessor, wobei der Profil-Server dem Teilnehmeridentitätselement zugeordnet ist, und ein Aussenden der Profil-Serverkennung über die Kommunikationsverbindung an das Teilnehmeridentitätselement durch die Kommunikationsschnittstelle. Das Verfahren kann durch den Discovery-Server ausgeführt werden. Weitere Merkmale des Verfahrens resultieren unmittelbar aus den Merkmalen und/oder der Funktionalität des Discovery-Servers.

Gemäß einem achten Aspekt betrifft die Erfindung ein Computerprogramm nach Anspruch 10 mit einem Programmcode zum Ausführen des Verfahrens gemäß dem sechsten Aspekt der Erfindung oder des Verfahrens gemäß dem siebten Aspekt der Erfindung, wenn das Computerprogramm auf einem Computer ausgeführt wird. Das Teilnehmeridentitätselement und/oder der Discovery-Server können programmtechnisch eingerichtet sein, um das Computerprogramm auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Teilnehmeridentitätselementes zum Authentifizieren eines Kommunikationsgerätes gegenüber einem Kommunikationsnetzwerk;
Fig. 2 ein schematisches Diagramm eines Kommunikationsgerätes zum Kommunizieren über ein Kommunikationsnetzwerk;
Fig. 3 ein schematisches Diagramm eines Discovery-Servers zum Kommunizieren mit einem Teilnehmeridentitätselement über ein Kommunikationsnetzwerk;
Fig. 4 ein schematisches Diagramm eines Kommunikationssystems zum Kommunizieren über ein Kommunikationsnetzwerk;
Fig. 5 ein schematisches Diagramm eines Verfahrens zum Authentifizieren eines Kommunikationsgerätes gegenüber einem Kommunikationsnetzwerk unter Verwendung eines Teilnehmeridentitätselements; und
Fig. 6 ein schematisches Diagramm eines Verfahrens zum Kommunizieren mit einem Teilnehmeridentitätselement über ein Kommunikationsnetzwerk unter Verwendung eines Discovery-Servers.

### DETAILIERTE BESCHREIBUNG DER FIGUREN

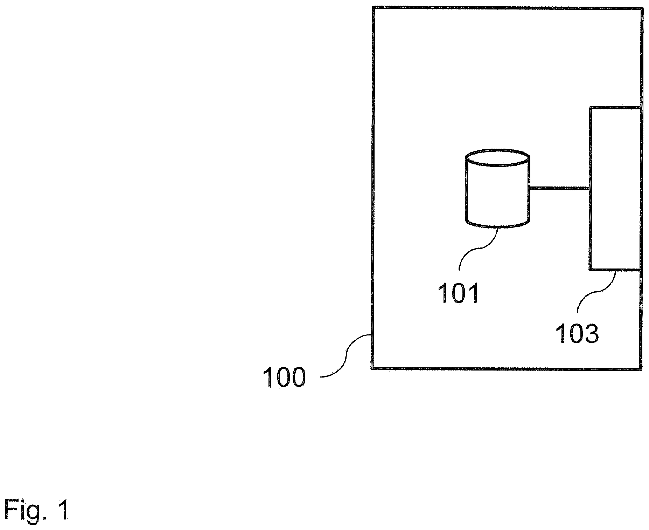

Fig. 1 zeigt ein schematisches Diagramm eines Teilnehmeridentitätselementes 100 zum Authentifizieren eines Kommunikationsgerätes gegenüber einem Kommunikationsnetzwerk. Dem Teilnehmeridentitätselement 100 ist eine Teilnehmeridentitätskennung zugeordnet. Das Kommunikationsnetzwerk umfasst ein Subnetzwerk mit einem Discovery-Server.

Das Teilnehmeridentitätselement 100 umfasst einen Speicher 101, in welchem ein Initialisierungsprofil des Teilnehmeridentitätselements 100 gespeichert ist, wobei das Initialisierungsprofil eine Subnetzwerkkennung des Subnetzwerks anzeigt. Das Teilnehmeridentitätselement 100 umfasst ferner eine Kommunikationsschnittstelle 103, welche ausgebildet ist, eine Kommunikationsverbindung zu dem Discovery-Server unter Verwendung der Subnetzwerkkennung aufzubauen, und die Teilnehmeridentitätskennung über die Kommunikationsverbindung an den Discovery-Server auszusenden.

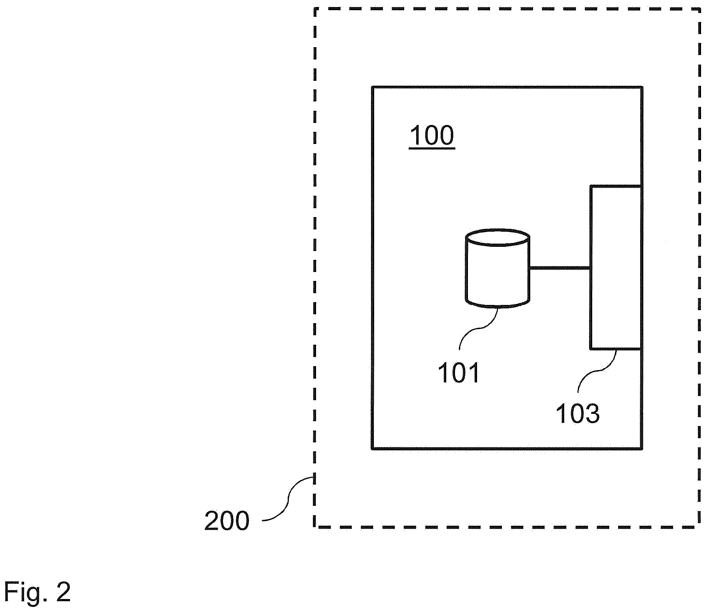

Fig. 2 zeigt ein schematisches Diagramm eines Kommunikationsgerätes 200 zum Kommunizieren über ein Kommunikationsnetzwerk. Das Kommunikationsgerät 200 umfasst ein Teilnehmeridentitätselement 100, wobei das Teilnehmeridentitätselement 100 ausgebildet ist, das Kommunikationsgerät 200 gegenüber dem Kommunikationsnetzwerk zu authentifizieren. Dem Teilnehmeridentitätselement 100 ist eine Teilnehmeridentitätskennung zugeordnet. Das Kommunikationsnetzwerk umfasst ein Subnetzwerk mit einem Discovery-Server.

Das Teilnehmeridentitätselement 100 umfasst einen Speicher 101, in welchem ein Initialisierungsprofil des Teilnehmeridentitätselements 100 gespeichert ist, wobei das Initialisierungsprofil eine Subnetzwerkkennung des Subnetzwerks anzeigt. Das Teilnehmeridentitätselement 100 umfasst ferner eine Kommunikationsschnittstelle 103, welche ausgebildet ist, eine Kommunikationsverbindung zu dem Discovery-Server unter Verwendung der Subnetzwerkkennung aufzubauen, und die Teilnehmeridentitätskennung über die Kommunikationsverbindung an den Discovery-Server auszusenden.

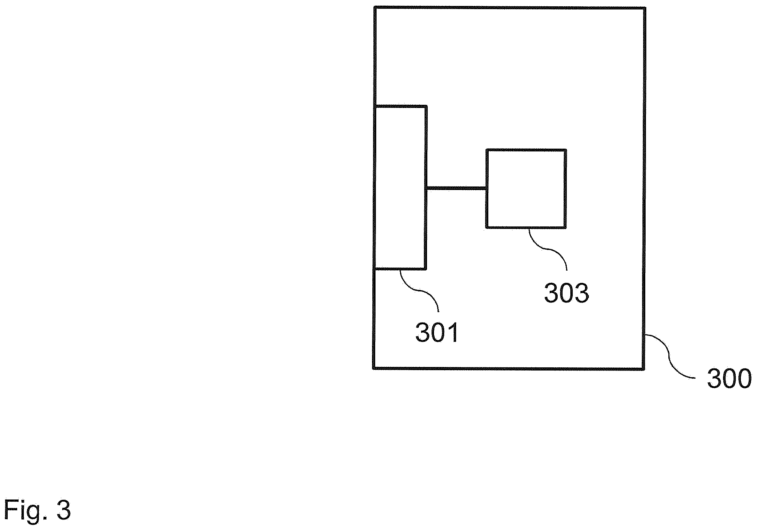

Fig. 3 zeigt ein schematisches Diagramm eines Discovery-Servers 300 zum Kommunizieren mit einem Teilnehmeridentitätselement über ein Kommunikationsnetzwerk. Der Discovery-Server 300 ist einem Subnetzwerk des Kommunikationsnetzwerkes zugeordnet. Das Teilnehmeridentitätselement ist ausgebildet, eine Kommunikationsverbindung zu dem Discovery-Server 300 unter Verwendung einer Subnetzwerkkennung des Subnetzwerks aufzubauen.

Der Discovery-Server 300 umfasst eine Kommunikationsschnittstelle 301, welche ausgebildet ist, eine Teilnehmeridentitätskennung über die Kommunikationsverbindung von dem Teilnehmeridentitätselement zu empfangen, wobei dem Teilnehmeridentitätselement die Teilnehmeridentitätskennung zugeordnet ist. Der Discovery-Server 300 umfasst ferner einen Prozessor 303, welcher ausgebildet ist, eine Profil-Serverkennung eines Profil-Servers auf der Basis der Teilnehmeridentitätskennung zu bestimmen, wobei der Profil-Server dem Teilnehmeridentitätselement zugeordnet ist. Die Kommunikationsschnittstelle 301 ist ferner ausgebildet, die Profil-Serverkennung über die Kommunikationsverbindung an das Teilnehmeridentitätselement auszusenden.

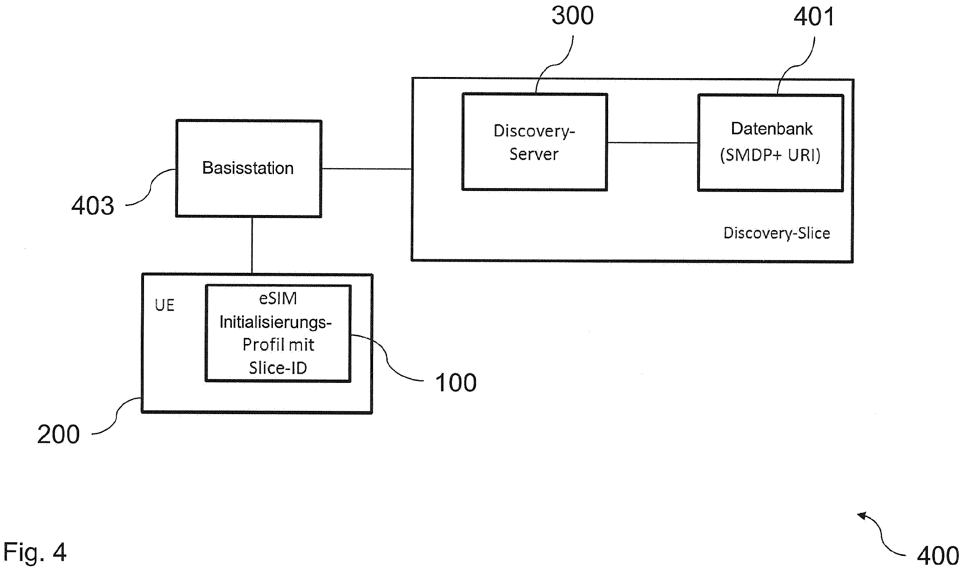

Fig. 4 zeigt ein schematisches Diagramm eines Kommunikationssystems 400 zum Kommunizieren über ein Kommunikationsnetzwerk.

Das Kommunikationssystem 400 umfasst ein Kommunikationsgerät 200, wobei das Kommunikationsgerät 200 ein Teilnehmeridentitätselement 100 umfasst. Das Kommunikationssystem 400 umfasst ferner einen Discovery-Server 300, wobei der Discovery-Server 300 einem Subnetzwerk des Kommunikationsnetzwerkes zugeordnet ist. Das Kommunikationssystem 400 umfasst ferner eine Datenbank 401, wobei die Datenbank 401 dem Subnetzwerk zugeordnet ist. Die Datenbank 401 zeigt eine Zuordnung einer Mehrzahl von Teilnehmeridentitätskennungen zu einer Mehrzahl von Profil-Serverkennungen an, wobei jeder Teilnehmeridentitätskennung eine Profil-Serverkennung zugeordnet ist. Die Kommunikation zwischen dem Teilnehmeridentitätselement 100 und dem Discovery-Server 300 erfolgt über eine Basisstation 403 des Kommunikationsnetzwerkes.

Das Subnetzwerk umfasst den Discovery-Server 300, welcher in dem Subnetzwerk angeordnet ist und über das Subnetzwerk adressierbar ist. Das Subnetzwerk kann ein Slice bzw. ein Discovery-Slice des Kommunikationsnetzwerkes sein.

Das Teilnehmeridentitätselement 100, welches beispielsweise eine eSIM sein kann, kann mit einem Initialisierungsprofil, beispielsweise einem Bootstrapprofil, versehen sein, welches eine Discovery-Serverkennung, beispielsweise eine URI, des Discovery-Servers 300 umfassen kann. Darüber hinaus kann eine initiale Konnektivität beispielsweise über WLAN (Wireless Local Area Network) oder über eine Kabelverbindung bereitgestellt sein. Bei einem ersten Einbuchen in das Kommunikationsnetzwerk kann das Teilnehmeridentitätselement 100 die Teilnehmeridentitätskennung, beispielsweise eine eID, an den Discovery-Server 300 übermitteln. Dieser kann auf dieser Basis einen Profil-Server, beispielsweise einen SMDP+ Server, dem Teilnehmeridentitätselement 100 zuordnen und eine Profil-Serverkennung, beispielsweise eine URI, des Profil-Servers an das Teilnehmeridentitätselement 100 übertragen. Der Profil-Server stellt ein Teilnehmerprofil für das Teilnehmeridentitätselement 100 bereit, welches von einem MNO (Mobile Network Operator) stammen kann. Insbesondere für Kommunikationsnetzwerke der fünften Generation (5G) und weiterer Generationen ist eine Bereitstellung eines Discovery-Dienstes wünschenswert.

Anstatt eines isolierten Discovery-Servers 300 kann ein Subnetzwerk des Kommunikationsnetzwerkes mit dem Discovery-Server 300 bereitgestellt werden. Gemäß einer Ausführungsform wird ein Slice, beispielsweise ein Discovery-Slice, eingesetzt, in welchem der Discovery-Server 300 angeordnet ist. Das Subnetzwerk kann durch einen MNO betrieben werden.

Das Initialisierungsprofil kann neben der Discovery-Serverkennung, beispielsweise der URI, des Discovery-Servers 300 eine Subnetzwerkkennung, beispielsweise eine Slice-Kennung, des Subnetzwerkes umfassen. Die Kennungen können ferner in dem Kommunikationsgerät 200, welches ein UE (User Equipment) sein kann, bereitgestellt sein. Dies ist insbesondere dann vorteilhaft, wenn der Discovery-Service (DS) mehr Bezug zum Kommunikationsgerät 200 als zum Teilnehmerprofil hat. Beispielsweise kann ein Hersteller des Kommunikationsgerätes 200 einen herstellereigenen DS bereitstellen.

Das Routing in das Subnetzwerk, beispielsweise das Slice, kann mittels der Subnetzwerkkennung, beispielsweise der Slice-Kennung, im Initialisierungsprofil erfolgen. In dem Subnetzwerk können der Discovery-Server 300 sowie die Datenbank 401 angeordnet sein, wobei die Datenbank 401 die Profil-Serverkennungen, beispielsweise die URIs, der Profil-Server, beispielsweise der SMDP+ Server, anzeigen kann. Der Discovery-Server 300 und/oder die Datenbank 401 können zentral oder dezentral angeordnet sein. Die dezentrale Anordnung hat den Vorteil, dass die Datenbank 401 unabhängig von dem Discovery-Server 300 aktualisiert werden kann.

Der Discovery-Server 300 kann beispielsweise ein Computerprogramm ausführen, welches folgende Komponenten bereitstellen kann:
- einen Kommunikationsserver, beispielsweise einen HTTP-Server (Hypertext Transfer Protocol), mit welchem sich verschiedene Clients verbinden können. Beispielsweise kann das Kommunikationsgerät 200 ein Client sein, wenn es die Profil-Serverkennung, beispielsweise eine SMDP+ URI, für eine Teilnehmeridentitätskennung, beispielsweise eine eID, abfragt. Ferner kann der Profil-Server, beispielsweise der SMDP+ Server, ein Client sein, wenn er seine Profil-Serverkennung, beispielsweise URI, für eine Teilnehmeridentitätskennung, beispielsweise eine eID, ablegt.
- eine Persistenz-Schicht zur Kommunikation mit der Datenbank 401, in welcher beispielsweise Paare (SMDP+ URI, EID) temporär gespeichert werden können.

Hierbei sind verschiedene Implementierungen möglich. Beispielsweise kann ein Route HTTP-Request auf mehrere HTTP-Server verteilt werden, die auf die Datenbank 401 zugreifen.

Der Discovery-Server 300 kann anhand der Teilnehmeridentitätskennung, beispielsweise der eID, den Profil-Server, beispielsweise den SMDP+ Server, oder dessen Profil-Serverkennung bestimmen, und kann von der Datenbank 401 die Profil-Serverkennung, beispielsweise die SMDP+ URI, abrufen, welche an das Teilnehmeridentitätselement 100 übermittelt wird. Das Teilnehmeridentitätselement 100 kann in einem nächsten Schritt den Profil-Server, beispielsweise den SMDP+ Server, kontaktieren und von dort das Teilnehmerprofil abrufen.

Falls der Profil-Server, beispielsweise der SMDP+ Server, einem MNO zugeordnet ist, so kann die Datenbank 401 die Teilnehmerprofile verwaltet. In diesem Fall kann das Subnetzwerk, beispielsweise das Slice, das Teilnehmerprofil auch direkt an das Teilnehmeridentitätselement 100 übermitteln.

Dadurch wird der Vorteil erreicht, dass Einbuchungen bei der Initialisierung des Teilnehmeridentitätselementes 100 das allgemeine Kommunikationsnetzwerk weniger belasten und durch das Subnetzwerk, beispielsweise das Slice, abgewickelt werden können. Das Subnetzwerk, beispielsweise das Slice, kann ferner einfacher verwaltet werden als eine Mehrzahl dezentral angeordneter Server.

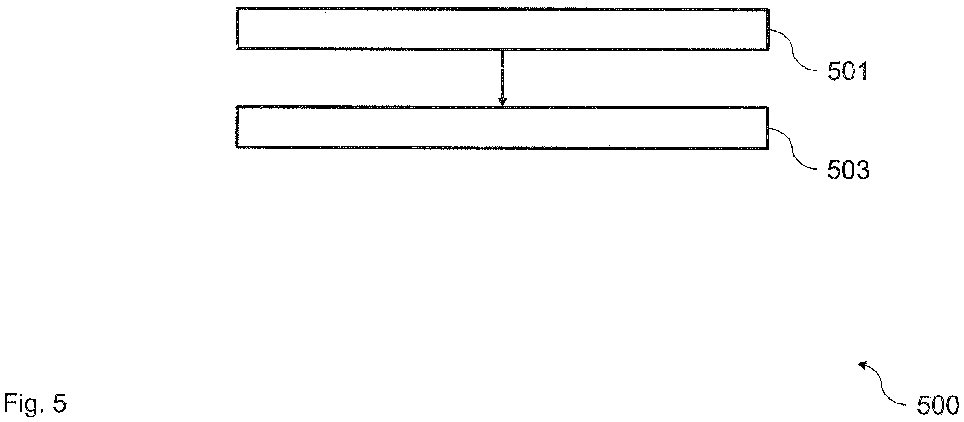

Fig. 5 zeigt ein schematisches Diagramm eines Verfahrens 500 zum Authentifizieren eines Kommunikationsgerätes gegenüber einem Kommunikationsnetzwerk unter Verwendung eines Teilnehmeridentitätselements. Das Teilnehmeridentitätselement umfasst einen Speicher und eine Kommunikationsschnittstelle. Dem Teilnehmeridentitätselement ist eine Teilnehmeridentitätskennung zugeordnet. Das Kommunikationsnetzwerk umfasst ein Subnetzwerk mit einem Discovery-Server. In dem Speicher ist ein Initialisierungsprofil des Teilnehmeridentitätselements gespeichert, wobei das Initialisierungsprofil eine Subnetzwerkkennung des Subnetzwerks anzeigt.

Das Verfahren 500 umfasst ein Aufbauen 501 einer Kommunikationsverbindung zu dem Discovery-Server unter Verwendung der Subnetzwerkkennung durch die Kommunikationsschnittstelle, und ein Aussenden 503 der Teilnehmeridentitätskennung über die Kommunikationsverbindung an den Discovery-Server durch die Kommunikationsschnittstelle.

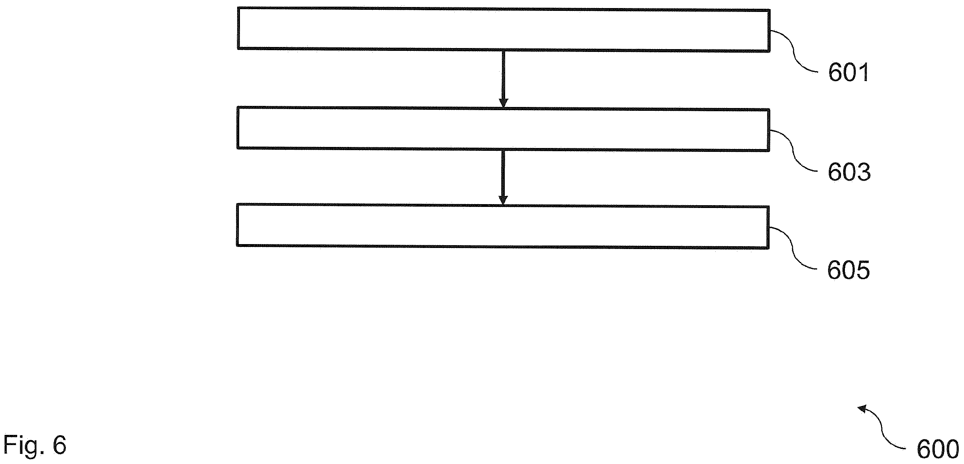

Fig. 6 zeigt ein schematisches Diagramm eines Verfahrens 600 zum Kommunizieren mit einem Teilnehmeridentitätselement über ein Kommunikationsnetzwerk unter Verwendung eines Discovery-Servers. Der Discovery-Server umfasst eine Kommunikationsschnittstelle und einen Prozessor. Der Discovery-Server ist einem Subnetzwerk des Kommunikationsnetzwerkes zugeordnet. Das Teilnehmeridentitätselement ist ausgebildet, eine Kommunikationsverbindung zu dem Discovery-Server unter Verwendung einer Subnetzwerkkennung des Subnetzwerks aufzubauen.

Das Verfahren 600 umfasst ein Empfangen 601 einer Teilnehmeridentitätskennung über die Kommunikationsverbindung von dem Teilnehmeridentitätselement durch die Kommunikationsschnittstelle, wobei dem Teilnehmeridentitätselement die Teilnehmeridentitätskennung zugeordnet ist, ein Bestimmen 603 einer Profil-Serverkennung eines Profil-Servers auf der Basis der Teilnehmeridentitätskennung durch den Prozessor, wobei der Profil-Server dem Teilnehmeridentitätselement zugeordnet ist, und ein Aussenden 605 der Profil-Serverkennung über die Kommunikationsverbindung an das Teilnehmeridentitätselement durch die Kommunikationsschnittstelle.

### BEZUGSZEICHENLISTE

- 100: Teilnehmeridentitätselement
- 101: Speicher
- 103: Kommunikationsschnittstelle

- 200: Kommunikationsgerät

- 300: Discovery-Server
- 301: Kommunikationsschnittstelle
- 303: Prozessor

- 400: Kommunikationssystem
- 401: Datenbank
- 403: Basisstation

- 500: Verfahren zum Authentifizieren
- 501: Aufbauen
- 503: Aussenden

- 600: Verfahren zum Kommunizieren
- 601: Empfangen
- 603: Bestimmen
- 605: Aussenden

## Patentansprüche

1. Kommunikationssystem (400) zum Kommunizieren über ein Kommunikationsnetzwerk, das ein von einem Mobilfunknetzoperator MNO betriebenes Subnetzwerk umfasst, wobei das Kommunikationssystem umfasst:
- ein Kommunikationsgerät (200), wobei das Kommunikationsgerät (200) ein Teilnehmeridentitätselement (100) zum Authentifizieren des Kommunikationsgerätes (200) gegenüber dem Kommunikationsnetzwerk umfasst, wobei dem Teilnehmeridentitätselement (100) eine Teilnehmeridentitätskennung zugeordnet ist und das Teilnehmeridentitätselement umfasst:
a) einen Speicher (101), in welchem als Initialisierungsprofil ein Bootstrapprofil des Teilnehmeridentitätselements (100) gespeichert ist, wobei das Initialisierungsprofil eine Subnetzwerkkennung des Subnetzwerks und eine Discovery-Serverkennung für einen Discovery-Server (300) anzeigt; und
b) eine Kommunikationsschnittstelle (103), welche ausgebildet ist, eine Kommunikationsverbindung zu dem Discovery-Server (300) unter Verwendung der Subnetzwerkkennung aufzubauen, und die Teilnehmeridentitätskennung über die Kommunikationsverbindung an den Discovery-Server (300) auszusenden, und
- den Discovery-Server (300) zum Kommunizieren mit dem Teilnehmeridentitätselement (100) über das Kommunikationsnetzwerk, wobei der Discovery-Server (300) dem als Discovery-Slice ausgebildeten Subnetzwerk des Kommunikationsnetzwerkes zugeordnet ist und in dem Discovery-Slice angeordnet und darüber adressierbar ist, wobei der Discovery-Server (300) umfasst:
A) einen Prozessor (303), welcher ausgebildet ist, eine Profil-Serverkennung eines Profil-Servers auf der Basis der Teilnehmeridentitätskennung zu bestimmen, wobei der Profil-Server dem Teilnehmeridentitätselement (100) und dem MNO zugeordnet ist; und
B) eine Kommunikationsschnittstelle (301), welche ausgebildet ist, die Teilnehmeridentitätskennung über die Kommunikationsverbindung von dem Teilnehmeridentitätselement (100) zu empfangen, wobei die Kommunikationsschnittstelle (301) ferner ausgebildet ist, die Profil-Serverkennung über die Kommunikationsverbindung an das Teilnehmeridentitätselement (100) auszusenden;
- eine Datenbank (401), wobei die Datenbank (401) dem Subnetzwerk zugeordnet ist, wobei die Datenbank (401) eine Zuordnung einer Mehrzahl von Teilnehmeridentitätskennungen zu einer Mehrzahl von Profil-Serverkennungen anzeigt, und wobei jeder Teilnehmeridentitätskennung eine Profil-Serverkennung zugeordnet ist, und wobei die Datenbank (401) Teilnehmerprofile verwaltet, wobei eine Kommunikation zwischen dem Teilnehmeridentitätselement (100) und dem Discovery-Server (300) über eine Basisstation (403) des Kommunikationsnetzwerkes erfolgt und der Discovery-Server (300) und die Datenbank (401) dezentral angeordnet sind.

2. Kommunikationssystem (400) nach Anspruch 1, wobei die Kommunikationsschnittstelle (103) ferner ausgebildet ist, die Kommunikationsverbindung zu dem Discovery-Server (300) unter Verwendung der Discovery-Serverkennung aufzubauen.

3. Kommunikationssystem (400) nach einem der vorstehenden Ansprüche, wobei das Kommunikationsnetzwerk ferner den Profil-Server umfasst, wobei dem Profil-Server eine Profil-Serverkennung zugeordnet Ist, und wobei die Kommunikationsschnittstelle (103) des Teilnehmeridentitätselements (100) ferner ausgebildet ist, die Profll-Serverkennung von dem Discovery-Server (300) über die Kommunikationsverbindung zu empfangen.

4. Kommunikationssystem (400) nach Anspruch 3, wobei die Kommunikationsschnittstelle (103) des Teilnehmeridentitätselements (100) ferner ausgebildet ist, eine weitere Kommunikationsverbindung zu dem Profil-Server unter Verwendung der Profil-Serverkennung aufzubauen, und ein Teilnehmerprofil von dem Profil-Server über die weitere Kommunikationsverbindung abzurufen.

5. Kommunikationssystem (400) nach einem der vorstehenden Ansprüche, wobei die Kommunikationsschnittstelle (103) des Teilnehmeridentitätselements (100) ferner ausgebildet ist, die Kommunikationsverbindung zu dem Discovery-Server (300) bei einer erstmaligen Initialisierung des Teilnehmeridentitätselements (100) aufzubauen.

6. Kommunikationssystem (400) nach einem der vorstehenden Ansprüche, wobei das Kommunikationsnetzwerk ein Kommunikationsnetzwerk der fünften Generation (5G) oder einer weiteren Generation ist, wobei die Subnetzwerkkennung eine Slice-Kennung ist.

7. Kommunikationssystem (400) nach einem der vorstehenden Ansprüche, wobei die Kommunikationsschnittstelle (301) des Discovery-Servers (300) ferner ausgebildet ist, mit der Datenbank (401) zu kommunizieren.

8. Kommunikationssystem (400) nach Anspruch 7, wobei der Prozessor (303) ferner ausgebildet ist, die empfangene Teilnehmeridentitätskennung mit der Mehrzahl von Teilnehmeridentitätskennungen zu vergleichen, und wobei die Kommunikationsschnittstelle (301) des Discovery-Servers ausgebildet ist, eine Profil-Serverkennung von der Datenbank (401) abzurufen, welche der empfangenen Teilnehmeridentitätskennung zugeordnet ist.

9. Verfahren (500) zum Authentifizieren eines Kommunikationsgerätes (200) gegenüber einem Kommunikationsnetzwerk unter Verwendung eines Teilnehmeridentitätselements (100), wobei das Teilnehmeridentitätselement (100) einen Speicher (101) und eine Kommunikationsschnittstelle (103) umfasst, wobei dem Teilnehmeridentitätselement (100) eine Teilnehmeridentitätskennung zugeordnet ist, wobei das Kommunikationsnetzwerk ein von einem Mobilfunknetzoperator MNO betriebenes und als Discovery-Slice ausgebildetes Subnetzwerk mit einem Discovery-Server (300) umfasst, wobei in dem Speicher (101) als Initialisierungsprofil ein Bootstrapprofil des Teilnehmeridentitätselements (100) gespeichert ist, wobei das Initialisierungsprofil eine Subnetzwerkkennung des Subnetzwerks und eine Discovery-Serverkennung für den Discovery-Server (300) anzeigt, wobei der Discovery-Server (300) eine Kommunikationsschnittstelle (301) und einen Prozessor (303) umfasst, wobei der Discovery-Server (300) dem Subnetzwerk des Kommunikationsnetzwerkes zugeordnet ist und in dem Discovery-Slice angeordnet und darüber adressierbar ist, wobei eine Datenbank (401) dem Subnetzwerk zugeordnet ist, wobei die Datenbank (401) eine Zuordnung einer Mehrzahl von Teilnehmeridentitätskennungen zu einer Mehrzahl von Profil-Serverkennungen anzeigt, und wobei jeder Teilnehmeridentitätskennung eine Profil-Serverkennung zugeordnet ist, und wobei die Datenbank (401) Teilnehmerprofile verwaltet, wobei eine Kommunikation zwischen dem Teilnehmeridentitätselement (100) und dem Discovery-Server (300) über eine Basisstation (403) des Kommunikationsnetzwerkes erfolgt und der Discovery-Server (300) und die Datenbank (401) dezentral angeordnet sind, wobei das Verfahren folgende Schritte umfasst:
Aufbauen (501) einer Kommunikationsverbindung zu dem Discovery-Server (300) unter Verwendung der Subnetzwerkkennung durch die Kommunikationsschnittstelle (103);
Aussenden (503) der Teilnehmeridentitätskennung über die
Kommunikationsverbindung an den Discovery-Server (300) durch die Kommunikationsschnittstelle (103);
Empfangen (601) der Teilnehmeridentitätskennung über die
Kommunikationsverbindung von dem Teilnehmeridentitätselement (100) durch die Kommunikationsschnittstelle (301);
Bestimmen (603) einer Profil-Serverkennung eines Profil-Servers auf der Basis der Teilnehmeridentitätskennung durch den Prozessor (303), wobei der Profil-Server dem Teilnehmeridentitätselement (100) und dem MNO zugeordnet ist; und
Aussenden (605) der Profil-Serverkennung über die Kommunikationsverbindung an das Teiinehmeridentitätselement (100) durch die Kommunikationsschnittstelle (301).

10. Computerprogramm mit einem Programmcode zum Ausführen des Verfahrens (500) nach Anspruch 9, wenn das Computerprogramm auf einem Computer ausgeführt wird.

## Claims

1. A communication system (400) for communicating via a communication network comprising a subnetwork operated by a mobile radio network operator MNO, the communication system comprising:
- a communication device (200), wherein the communication device (200) comprises a subscriber identity element (100) for authenticating the communication device (200) to the communication network,
wherein the subscriber identity element (100) is assigned a subscriber identity identifier, and the subscriber identity element comprises:
a) a memory (101) in which a bootstrap profile of the subscriber identity element (100) is stored as an initialization profile, wherein the initialization profile indicates a subnetwork identifier of the subnetwork and a discovery server identifier for a discovery server (300); and
b) a communication interface (103) configured to establish a communication link to the discovery server (300) with the use of the subnetwork identifier and to send the subscriber identity identifier via the communication link to the discovery server (300);
and
- the discovery server (300) for communicating with the subscriber identity element (100) via the communication network, wherein the discovery server (300) is assigned to the subnetwork of the communication network, said subnetwork being configured as a discovery slice, and is arranged in and addressable via the discovery slice, the discovery server (300) comprising:
A) a processor (303) configured to determine a profile server identifier of a profile server based on the subscriber identity identifier, wherein the profile server is assigned to the subscriber identity element (100) and the MNO; and
B) a communication interface (301) configured to receive the subscriber identity identifier via the communication link from the subscriber identity element (100), wherein the communication interface (301) is further configured to send the profile server identifier via the communication link to the subscriber identity element (100);
- a database (401), wherein the database (401) is assigned to the subnetwork, wherein the database (401) indicates an assignment of a plurality of subscriber identity identifiers to a plurality of profile server identifiers, and wherein each subscriber identity identifier is assigned a profile server identifier, and wherein the database (401) manages subscriber profiles,
wherein communication between the subscriber identity element (100) and the discovery server (300) takes place via a base station (403) of the communication network, and the discovery server (300) and the database (401) are arranged in a decentralized manner.

2. The communication system (400) according to claim 1, wherein the communication interface (103) is further configured to establish the communication link to the discovery server (300) with the use of the discovery server identifier.

3. The communication system (400) according to any one of the preceding claims, wherein the communication network further comprises the profile server, wherein the profile server is assigned a profile server identifier, and wherein the communication interface (103) of the subscriber identity element (100) is further configured to receive the profile server identifier from the discovery server (300) via the communication link.

4. The communication system (400) according to claim 3, wherein the communication interface (103) of the subscriber identity element (100) is further configured to establish a further communication link to the profile server with the use of the profile server identifier and to retrieve a subscriber profile from the profile server via the further communication link.

5. The communication system (400) according to any one of the preceding claims, wherein the communication interface (103) of the subscriber identity element (100) is further configured to establish the communication link to the discovery server (300) upon a first initialization of the subscriber identity element (100).

6. The communication system (400) according to any one of the preceding claims, wherein the communication network is a communication network of the fifth generation (5G) or a further generation, wherein the subnetwork identifier is a slice identifier.

7. A communication system (400) according to any one of the preceding claims, wherein the communication interface (301) of the discovery server (300) is further configured to communicate with the database (401).

8. The communication system (400) according to claim 7, wherein the processor (303) is further configured to compare the received subscriber identity identifier with the plurality of subscriber identity identifiers, and wherein the communication interface (301) of the discovery server is configured to retrieve from the database (401) a profile server identifier assigned to the received subscriber identity identifier.

9. A method (500) for authenticating a communication device (200) to a communication network with the use of a subscriber identity element (100), wherein the subscriber identity element (100) comprises a memory (101) and a communication interface (103), wherein the subscriber identity element (100) is assigned a subscriber identity identifier, wherein the communication network comprises a subnetwork with a discovery server (300), said subnetwork being operated by a mobile radio network operator MNO and configured as a discovery slice, wherein a bootstrap profile of the subscriber identity element (100) is stored in the memory (101) as an initialization profile, wherein the initialization profile indicates a subnetwork identifier of the subnetwork and a discovery server identifier for the discovery server (300), wherein the discovery server (300) comprises a communication interface (301) and a processor (303), wherein the discovery server (300) is assigned to the subnetwork of the communication network and is arranged in and addressable via the discovery slice, wherein a database (401) is assigned to the subnetwork, wherein the database (401) indicates an assignment of a plurality of subscriber identity identifiers to a plurality of profile server identifiers, and wherein each subscriber identity identifier is assigned a profile server identifier, and wherein the database (401) manages subscriber profiles, wherein communication between the subscriber identity element (100) and the discovery server (300) takes place via a base station (403) of the communication network, and the discovery server (300) and the database (401) are arranged in a decentralized manner, the method comprising the following steps:
Establishing (501) a communication link to the discovery server (300) with the use of the subnetwork identifier via the communication interface (103);
Sending (503) the subscriber identity identifier via the communication link to the discovery server (300) via the communication interface (103);
Receiving (601) the subscriber identity identifier via the communication link from the subscriber identity element (100) via the communication interface (301);
Determining (603) a profile server identifier of a profile server based on the subscriber identity identifier by the processor (303), wherein the profile server is assigned to the subscriber identity element (100) and the MNO; and
Sending (605) the profile server identifier via the communication link to the subscriber identity element (100) via the communication interface (301).

10. A computer program having a program code for executing the method (500) according to claim 9 when the computer program is executed on a computer.

## Revendications

1. Système de communication (400) destiné à communiquer via un réseau de communication comprenant un sous-réseau exploité par un opérateur de réseau de téléphonie mobile (MNO), ledit système de communication comprenant :
- un appareil de communication (200), ledit appareil de communication (200) comprenant un élément d'identité d'abonné (100) destiné à authentifier l'appareil de communication (200) par rapport au réseau de communication,
un identifiant d'abonné étant attribué à l'élément d'identité d'abonné (100) et l'élément d'identité d'abonné comprenant :
a) une mémoire (101) destinée à stocker un profil de démarrage de l'élément d'identité d'abonné (100) sous la forme d'un profil d'initialisation, ledit profil d'initialisation indiquant un identifiant de sous-réseau pour le sous-réseau et un identifiant de serveur de découverte pour un serveur de découverte (300) ; et
b) une interface de communication (103) configurée de manière à établir une liaison de communication avec le serveur de découverte (300) à l'aide de l'identifiant du sous-réseau et à envoyer l'identifiant d'abonné au serveur de découverte (300) via la liaison de communication, et
- le serveur de découverte (300) destiné à communiquer avec l'élément d'identité d'abonné (100) via le réseau de communication, sachant que ledit serveur de découverte (300) est associé au sous-réseau du réseau de communication, conçu sous la forme d'une tranche de découverte, et qu'il est disposé dans la tranche de découverte et est adressable via celle-ci, ledit serveur de découverte (300) comprenant :
A) un processeur (303) configuré de manière à déterminer un identifiant de serveur de profil pour un serveur de profil sur la base de l'identifiant d'abonné, ledit serveur de profil étant associé à l'élément d'identité d'abonné (100) et à l'opérateur de réseau de téléphonie mobile (MNO) ; et
B) une interface de communication (301) configurée de manière à recevoir l'identifiant d'abonné provenant de l'élément d'identité d'abonné (100) via la liaison de communication, ladite interface de communication (301) étant en outre configurée de manière à envoyer l'identifiant de serveur de profil à l'élément d'identité d'abonné (100) via la liaison de communication ;
- une banque de données (401), ladite banque de données (401) étant associée au sous-réseau, sachant que la banque de données (401) indique une attribution d'une pluralité d'identifiants d'abonnés à une pluralité d'identifiants du serveur de profil et qu'un identifiant de serveur de profil est associé à chaque identifiant d'abonné, et que la banque de données (401) gère des profils d'abonnés,
une communication étant établie entre l'élément d'identité d'abonné (100) et le serveur de découverte (300) par l'intermédiaire d'une station de base (403) du réseau de communication, et le serveur de découverte (300) et la banque de données (401) étant disposés de façon décentralisée.

2. Système de communication (400) selon la revendication 1, dans lequel l'interface de communication (103) est configurée en outre de manière à établir la liaison de communication avec le serveur de découverte (300) à l'aide de l'identifiant de serveur de découverte.

3. Système de communication (400) selon l'une des revendications précédentes, dans lequel le réseau de communication comprend en outre le serveur de profil, un identifiant de serveur de profil étant associé au serveur de profil, et dans lequel l'interface de communication (103) de l'élément d'identité d'abonné (100) est configurée en outre de manière à recevoir l'identifiant de serveur de profil provenant du serveur de découverte (300) via la liaison de communication.

4. Système de communication (400) selon la revendication 3, dans lequel l'interface de communication (103) de l'élément d'identité d'abonné (100) est configurée en outre de manière à établir une nouvelle liaison de communication avec le serveur de profil à l'aide de l'identifiant de serveur de profil et à obtenir un profil d'abonné du serveur de profil via la nouvelle liaison de communication.

5. Système de communication (400) selon l'une des revendications précédentes, dans lequel l'interface de communication (103) de l'élément d'identité d'abonné (100) est configurée en outre de manière à établir la liaison de communication avec le serveur de découverte (300) lors d'une première initialisation de l'élément d'identité d'abonné (100).

6. Système de communication (400) selon l'une des revendications précédentes, dans lequel le réseau de communication est un réseau de communication de la cinquième génération (5G) ou d'une génération postérieure, l'identifiant de sous-réseau étant un identifiant de tranche.

7. Système de communication (400) selon l'une des revendications précédentes, dans lequel l'interface de communication (301) du serveur de découverte (300) est configurée en outre de manière à communiquer avec la banque de données (401).

8. Système de communication (400) selon la revendication 7, dans lequel le processeur (303) est en outre conçu de manière à comparer l'identifiant d'abonné reçu avec la pluralité d'identifiants d'abonnés, et dans lequel l'interface de communication (301) du serveur de découverte est configurée de manière à obtenir de la banque de données (401) un identifiant de serveur de profil associé à l'identifiant d'abonné reçu.

9. Procédé (500) d'authentification d'un appareil de communication (200) par rapport à un réseau de communication au moyen d'un élément d'identité d'abonné (100), ledit élément d'identité d'abonné (100) comprenant une mémoire (101) et une interface de communication (103), un identifiant d'abonné étant associé à l'élément d'identité d'abonné (100), le réseau de communication comprenant un sous-réseau exploité par un opérateur de réseau de téléphonie mobile (MNO) et configuré sous la forme d'une tranche de découverte, lequel sous-réseau comprenant un serveur de découverte (300), la mémoire (101) étant destinée à stocker un profil de démarrage de l'élément d'identité d'abonné (100) sous la forme d'un profil d'initialisation, ledit profil d'initialisation indiquant un identifiant de sous-réseau pour le sous-réseau et un identifiant de serveur de découverte pour le serveur de découverte (300), sachant que le serveur de découverte (300) comprend une interface de communication (301) et un processeur (303), que le serveur de découverte (300) est associé au sous-réseau du réseau de communication et qu'il est disposé dans la tranche de découverte et est adressable via celle-ci, sachant qu'une banque de données (401) est associée au sous-réseau, que la banque de données (401) indique une attribution d'une pluralité d'identifiants d'abonnés à une pluralité d'identifiants de serveur de profil, et qu'un identifiant de serveur de profil est associé à chaque identifiant d'abonné, et que la banque de données (401) gère des profils d'abonnés, une communication étant établie entre l'élément d'identité d'abonné (100) et le serveur de découverte (300) via une station de base (403) du réseau de communication et le serveur de découverte (300) et la banque de données (401) étant disposés de façon décentralisée, ledit procédé comprenant les étapes suivantes :
établissement (501) d'une liaison de communication avec le serveur de découverte (300) à l'aide de l'identifiant de sous-réseau au moyen de l'interface de communication (103) ;
envoi (503) de l'identifiant d'abonné au serveur de découverte (300) via la liaison de communication au moyen de l'interface de communication (103) ;
réception (601) de l'identifiant d'abonné provenant de l'élément d'identité d'abonné (100) via la liaison de communication au moyen de l'interface de communication (301) ;
détermination (603) d'un identifiant de serveur de profil pour un serveur de profil sur la base de l'identifiant d'abonné au moyen du processeur (303), ledit serveur de profil étant associé à l'élément d'identité d'abonné (100) et à l'opérateur de réseau de téléphonie mobile (MNO) ; et
envoi (605) de l'identifiant de serveur de profil à l'élément d'identité d'abonné (100) via la liaison de communication au moyen de l'interface de communication (301).

10. Programme informatique comprenant un code de programme pour la mise en œuvre du procédé (500) selon la revendication 9, si le programme informatique est exécuté sur un ordinateur.
